# EUROPÄISCHE PATENTSCHRIFT

(11) **EP 1 837 496 B1**
(45) Veröffentlichungstag und Bekanntmachung des Hinweises auf die Patenterteilung: **13.03.2013**
(21) Anmeldenummer: 06111580.4
(22) Anmeldetag: 23.03.2006
(51) Int. Cl.: F01N 3/035, F01N 3/08, F01N 3/28, F01N 3/20, F01N 3/022, F02D 41/02

(54) **Brennkraftmaschine mit kombiniertem Abgasnachbehandlungssystem und Verfahren zum Betreiben einer derartigen Brennkraftmaschine**
Internal combustion engine with combined exhaust treatment system and method of operation of such an internal combustion engine
Moteur à combustion interne avec un système de traitement combiné des gaz d'échappement et procédé d'opération d'un tel moteur à combustion interne

(43) Veröffentlichungstag der Anmeldung: 26.09.2007
(73) Patentinhaber: Ford Global Technologies, LLC, Dearborn, MI 48126 (US)
(72) Erfinder: Harmsen, Jan, 6369 BX, Simpelveld (NL); Balenovic, Mario, 5645 KT, Eindhoven (NL); Carberry, Brendan, 52074, Aachen (DE); Dubkov, Alexei, 52064, Aachen (DE); Yacoub, Yasser Mohammed Sayed, 50858, Köln (DE); Schneider, Matthew, 52064, Aachen (DE)
(74) Vertreter: Drömer, Hans-Carsten

(56) Entgegenhaltungen:
- EP-A- 1 101 908
- EP-A- 1 350 932
- EP-A- 1 363 009
- EP-A- 1 421 987
- EP-A- 1 458 476
- EP-A- 1 544 429
- EP-A1- 1 321 643
- WO-A-03/086580
- WO-A-2004/061278
- DE-A1-102004 052 256
- US-A1- 2003 167 755

## Beschreibung

Die Erfindung betrifft eine Brennkraftmaschine mit mindestens einem Zylinder und mindestens einer Abgasleitung zum Abführen der Abgase aus dem mindestens einen Zylinder, bei der ein kombiniertes Abgasnachbehandlungssystem zur Nachbehandlung des Abgases in der mindestens einen Abgasleitung vorgesehen ist, wobei das kombinierte Abgasnachbehandlungssystem ein Vier-Wege-Katalysator ist mit
- einem Oxidationskatalysator, insbesondere zur Oxidation des im Abgas befindlichen Kohlenmonoxides (CO) und der unverbrannten Kohlenwasserstoffe (HC),
- einem Speicherkatalysator LNT) zum Speichern und Reduzieren der im Abgas befindlichen Stickoxide (NOₓ), und
- einem Partikelfilter zum Sammeln und Verbrennen der im Abgas befindlichen Rußpartikel, wobei
- die Komponenten des kombinierten Abgasnachbehandlungssystems, d.h. der Oxidationskatalysator, der Speicherkatalysator und der Partikelfilter, in Reihe geschaltet sind, und
- stromaufwärts des kombinierten Abgasnachbehandlungssystems ein zusätzlicher Speicherkatalysator (LNT) vorgesehen ist.

Des Weiteren betrifft die Erfindung ein Verfahren zum Betreiben einer derartigen Brennkraftmaschine.

Eine mögliche Ausführungsform einer Brennkraftmaschine der oben genannten Art wird beispielsweise in der europäischen Patentanmeldung EP 1 321 643 A1 beschrieben.

Nach dem Stand der Technik werden Brennkraftmaschinen zur Reduzierung der Schadstoffemissionen mit verschiedenen Abgasnachbehandlungssystemen ausgestattet. Zwar findet auch ohne zusätzliche Maßnahmen während der Expansion und des Ausschiebens der Zylinderfüllung bei einem ausreichenden hohen Temperaturniveau und dem Vorhandensein genügend großer Sauerstoffmengen eine Oxidation der unverbrannten Kohlenwasserstoffe (HC) und von Kohlenmonoxid (CO) statt. Diese Reaktionen kommen aber aufgrund der stromabwärts schnell abnehmenden Abgastemperatur und der infolgedessen rapide sinkenden Reaktionsgeschwindigkeit schnell zum Erliegen. Eventueller Sauerstoffmangel kann durch eine Sekundärlufteinblasung kompensiert werden. Jedoch müssen in der Regel besondere Reaktoren und/oder Filter im Abgastrakt vorgesehen werden, um die Schadstoffemissionen unter sämtlichen Betriebsbedingungen spürbar zu reduzieren.

Thermische Reaktoren versuchen, eine weitgehende Nachoxidation von HC und CO im Abgassystem zu erzielen, indem eine Wärmeisolation und ein ausreichend großes Volumen im Abgasrohr des Abgassystems vorgesehen wird. Die Wärmeisolation soll ein möglichst hohes Temperaturniveau durch Minimierung der Wärmeverluste sicherstellen, wohingegen ein großes Abgasrohrvolumen eine lange Verweildauer der Abgase gewährleistet. Sowohl die lange Verweildauer als auch das hohe Temperaturniveau unterstützen die angestrebte Nachoxidation. Nachteilig ist der schlechte Wirkungsgrad bei unterstöchiometrischer Verbrennung und die hohen Kosten. Für Dieselmotoren sind thermische Reaktoren aufgrund des grundsätzlich niedrigeren Temperaturniveaus nicht zielführend.

Aus den genannten Gründen kommen nach dem Stand der Technik bei Ottomotoren katalytische Reaktoren zum Einsatz, die unter Verwendung katalytischer Materialien, die die Geschwindigkeit bestimmter Reaktionen erhöhen, eine Oxidation von HC und CO auch bei niedrigen Temperaturen sicherstellen. Sollen zusätzlich Stickoxide reduziert werden, kann dies durch den Einsatz eines Dreiwegkatalysators erreicht werden, der dazu aber einen in engen Grenzen ablaufenden stöchiometrischen Betrieb (λ ≈ 1) des Ottomotors erfordert.

Dabei werden die Stickoxide NOₓ mittels der vorhandenen nicht oxidierten Abgaskomponenten, nämlich den Kohlenmonoxiden und den unverbrannten Kohlenwasserstoffen, reduziert, wobei gleichzeitig diese Abgaskomponenten oxidiert werden.

Bei Brennkraftmaschinen, die mit einem Luftüberschuss betrieben werden, also beispielsweise im Magerbetrieb arbeitende Ottomotoren, insbesondere aber direkteinspritzende Dieselmotoren aber auch direkteinspritzende Ottomotoren, können die im Abgas befindlichen Stickoxide prinzipbedingt - d. h. aufgrund der fehlenden Reduktionsmittel - nicht reduziert werden.

Zur Oxidation der unverbrannten Kohlenwasserstoffe (HC) und von Kohlenmonoxid (CO) wird ein Oxidationskatalysator im Abgassystem vorgesehen. Zur Reduzierung der Stickoxide werden selektive Katalysatoren - sogenannte SCR-Katalysatoren - eingesetzt, bei denen gezielt Reduktionsmittel in das Abgas eingebracht werden, um die Stickoxide selektiv zu vermindern. Als Reduktionsmittel kommen neben Ammoniak und Harnstoff auch unverbrannte Kohlenwasserstoffe zum Einsatz. Letzteres wird auch als HC-Anreicherung bezeichnet, wobei die unverbrannten Kohlenwasserstoffe direkt in den Abgastrakt eingebracht werden oder aber durch innermotorische Maßnahmen, nämlich durch eine Nacheinspritzung von zusätzlichem Kraftstoff in den Brennraum nach der eigentlichen Verbrennung, zugeführt werden. Dabei soll der nacheingespritzte Kraftstoff nicht im Brennraum durch die noch ablaufende Hauptverbrennung oder aber durch die - auch nach Beendigung der Hauptverbrennung - hohen Verbrennungsgastemperaturen gezündet werden, sondern während des Ladungswechsels in den Abgastrakt eingeleitet werden.

Brennkraftmaschinen, die von einer Nacheinspritzung Gebrauch machen, sind aber von Hause aus sehr anfällig für eine Verdünnung bzw. Kontaminierung des Öls durch unverbrannte Kohlenwasserstoffe. In Abhängigkeit von der Quantität des nacheingespritzten Kraftstoffes und dem Einspritzzeitpunkt, gelangt ein mehr oder weniger großer Anteil des nacheingespritzten Kraftstoffes auf die Zylinderinnenwand und mischt sich dort mit dem anhaftenden Ölfilm. Anschließend gelangt der Kraftstoff zusammen mit dem Öl und dem Blow-by Gas in das Kurbelgehäuse und trägt so maßgeblich zur Ölverdünnung bei. Die Ölverdünnung nimmt mit steigender Kraftstoffmenge und Verschieben der Nacheinspritzung nach spät zu. Durch die Veränderung der Schmierstoffeigenschaften des Öls hat die Ölverdünnung maßgeblich Einfluss auf den Verschleiß und die Haltbarkeit d.h. die Lebensdauer der Brennkraftmaschine.

Grundsätzlich können die Stickoxidemissionen auch mit sogenannten Stickoxidspeicherkatalysatoren (**LNT - Lean NOₓ Trap**) reduziert werden. Dabei werden die Stickoxide zunächst - während eines mageren Betriebs der Brennkraftmaschine - im Katalysator absorbiert d.h. gesammelt und gespeichert, um dann während einer Regenerationsphase beispielsweise mittels eines unterstöchiometrischen Betriebs (beispielsweise λ < 0,95) der Brennkraftmaschine bei Sauerstoffmangel reduziert zu werden. Weitere innermotorische Möglichkeiten zur Realisierung eines fetten d.h. eines unterstöchiometrischen Betriebs der Brennkraftmaschine bietet die Abgasrückführung (AGR) und - bei Dieselmotoren - die Drosselung im Ansaugtrakt. Auf innermotorische Maßnahmen kann verzichtet werden, wenn das Reduktionsmittel direkt in den Abgastrakt eingebracht wird, beispielsweise durch Einspritzen von zusätzlichem Kraftstoff. Während der Regenerationsphase werden die Stickoxide freigegeben und im wesentlichen in Stickstoffdioxid (N₂), Kohlenstoffdioxid (CO₂) und Wasser (H₂O) umgewandelt. Die Häufigkeit der Regenerationsphasen wird durch die Gesamtemission an Stickoxiden und die Speicherkapazität des LNT bestimmt.

Eine Schwierigkeit bei der Verwendung und insbesondere bei der Anordnung des LNT im Abgastrakt ergibt sich aus dem im Abgas enthaltenen Schwefel, der ebenfalls im LNT absorbiert wird und im Rahmen einer sogenannten Desulfurisation (deSOₓ) d. h. einer Entschwefelung regelmäßig entfernt werden muss. Hierfür muss der LNT auf hohe Temperaturen, üblicherweise zwischen 600°C und 700 °C, erwärmt und mit einem Reduktionsmittel versorgt werden, was wiederum durch den Übergang zu einem fetten Betrieb der Brennkraftmaschine erreicht werden kann. Die Entschwefelung des LNT kann zur thermischen Alterung dieses Katalysators beitragen und die gewollte Konvertierung der Stickoxide gegen Ende seiner Lebensdauer nachteilig beeinflussen.

Zur Minimierung der Emission von Rußpartikeln werden nach dem Stand der Technik sogenannte regenerative Partikelfilter eingesetzt, die die Rußpartikel aus dem Abgas herausfiltern und speichern, wobei diese Rußpartikel im Rahmen der Regeneration des Filters intermittierend verbrannt werden. Die Intervalle der Regeneration werden dabei unter anderem durch den Abgasgegendruck, der sich infolge des zunehmenden Strömungswiderstandes des Filters aufgrund der anwachsenden Partikelmasse im Filter einstellt, bestimmt.

Die zur Regeneration des Partikelfilters hohen Temperaturen - etwa 550°C bei nicht vorhandener katalytischer Unterstützung - werden im Betrieb nur bei hohen Lasten und hohen Drehzahlen erreicht. Daher muss auf zusätzliche Maßnahmen zurückgegriffen werden, um eine Regeneration des Filters unter allen Betriebsbedingungen zu gewährleisten.

Die Verbrennung der Partikel kann dabei durch im Abgastrakt vorgesehene Zusatzbrenner erfolgen oder aber durch eine Nacheinspritzung von zusätzlichem Kraftstoff in den Brennraum, wobei der nacheingespritzte Kraftstoff bereits im Brennraum gezündet wird, was durch die auslaufende Hauptverbrennung oder die gegen Ende der Verbrennung im Brennraum vorliegenden hohen Temperaturen geschehen kann, so dass die Abgastemperatur der in den Abgastrakt ausgeschobenen Abgase innermotorisch angehoben wird. Nachteilig an dieser Vorgehensweise sind insbesondere die im Abgastrakt auf dem Weg zum Filter zu befürchtenden Wärmeverluste und die damit verbundene Temperaturabsenkung der heißen Abgase. Der Filter kann ohne Weiteres einen Meter und mehr vom Auslass des Brennraums entfernt im Abgastrakt angeordnet sein.

Der Kompensation der Wärmeverluste durch die Generierung entsprechend hoher Abgastemperaturen sind durch die Temperaturfestigkeit anderer im Abgasstrang vorgesehener Bauteile Grenzen gesetzt, insbesondere der Temperaturbeständigkeit einer im Abgassystem angeordneten Turbine eines Abgasturboladers, eines Dreiwegekatalysators oder eines Speicherkatalysators. Üblicherweise wird die Turbine mit den höchsten Temperaturen beaufschlagt, da sie am nächsten am Auslaß des Brennraums angeordnet ist.

Der nacheingespritzte Kraftstoff kann auch unverbrannt und gegebenenfalls schon aufbereitet in den Abgastrakt ausgeschoben werden und dann gezielt lokal dort im Abgassystem oxidiert werden, wo hohe Abgastemperaturen notwendig sind, nämlich im Partikelfilter bzw. in seiner unmittelbaren Nachbarschaft. Die Verbrennung des nacheingespritzten Kraftstoffes kann katalytisch mittels eines vor dem Filter positionierten Katalysators initiiert werden. Es kann aber auch eine elektrische Zündung in bzw. an dem Rußfilter vorgesehen werden.

Ähnlich wie bereits für die Reduzierung der Stickoxide vorgeschlagen, kann auch Kraftstoff direkt in den Abgastrakt eingebracht werden. Die weitere Vorgehensweise entspricht der zuvor Beschriebenen, bei der der zusätzlich eingespritzte Kraftstoff unverbrannt in das Abgassystem gelangt und gezielt in der Nachbarschaft des Partikelfilters oxidiert wird. Dementsprechend leidet dieses Konzept auch an denselben Nachteilen.

Zudem muss berücksichtigt werden, dass der Einsatz von zusätzlichem Kraftstoff, sei es aufgrund eines Überganges zu einem fetten Motorbetrieb oder aber infolge der Anreicherung des Abgases mit Kraftstoff, prinzipbedingt den Kraftstoffverbrauch der Brennkraftmaschine nachteilig beeinflusst. Insbesondere die Häufigkeit, mit der der Partikelfilter regeneriert oder der LNT gereinigt wird, hat maßgeblichen und direkten Einfluss auf die zu diesen Zwecken eingesetzte Kraftstoffmenge und damit auf den Gesamtverbrauch.

Da sowohl die Abgase von Ottomotoren als auch die Abgase von Dieselmotoren - wenn auch in unterschiedlichen Mengen und Qualitäten - unverbrannte Kohlenwasserstoffe (HC), Kohlenmonoxid (CO), Stickoxide (NOₓ) als auch Rußpartikel enthalten, kommen nach dem Stand der Technik in der Regel kombinierte Abgasnachbehandlungssysteme zum Einsatz, die einen oder mehrere der oben beschriebenen Katalysatoren, Reaktoren und/oder Filter umfassen.

Untersuchungen haben gezeigt, dass innermotorische Maßnahmen zur Realisierung eines fetteren Betriebs der Brennkraftmaschine - ob zur Erhöhung der Abgastemperatur mit dem Ziel einer Filterregeneration oder aber für eine Anfettung zur Regeneration des LNT - grundsätzlich zu erhöhten Methan-Emissionen (CH₄) führen, wobei bei Dieselmotoren nahezu das gesamte Methan die Abgasleitung und die vorgesehenen Abgasnachbehandlungssysteme durchläuft und in die Umgebung austritt, ohne oxidiert zu werden. Die im Abgastrakt bzw. Oxidationskatalysator im normalen Betrieb der Brennkraftmaschine vorliegenden Temperaturen sind nicht hoch genug, um das im Abgas enthaltene Methan zu konvertieren bzw. zu oxidieren.

Folglich nehmen die HC-Emissionen, welche die Methan-Emissionen mit einschließen, spürbar zu, wenn ein im Abgastrakt vorgesehener Speicherkatalysator gereinigt oder ein Partikelfilter regeneriert werden soll und aus diesem Anlass die Brennkraftmaschine mittels innermotorischer Maßnahmen in den fetten Betrieb überführt wird. Das Methan kann dabei bis zu 90% der unverbrannten Kohlenwasserstoffe ausmachen, die während des fetten Betriebes von der Brennkraftmaschine emittiert und in den Abgastrakt eingeleitet werden.

Andererseits erhöhen sich die NOₓ- und Partikelemissionen, wenn infolge der gesetzlichen Reglementierung der HC-Emissionen weniger häufig in den fetten Betrieb der Brennkraftmaschine gewechselt wird und dadurch ein im Abgastrakt vorgesehener Speicherkatalysator und/oder Partikelfilter nicht mit der notwendigen Häufigkeit regeneriert wird. Ist die Speicherkapazität des LNT erschöpft, gelangen die Stickoxide ungehindert in die Umgebung. Ein zu hoch beladener Partikelfilter führt zu einem unvorteilhaft hohen Abgasgegendruck, wodurch auch die Qualität der Verbrennung, insbesondere durch einen verschlechterten Ladungswechsel, leidet.

Zusammenfassend kann festgehalten werden, dass die beabsichtigte gleichzeitige Reduzierung der maßgeblichen Schadstoffe, nämlich HC und CO einerseits und NOₓ und Partikel andererseits, in einen Konflikt mündet; wie zuvor dargestellt. Darüber hinaus ergeben sich weitere Konflikte bei der Anordnung der einzelnen Abgasnachbehandlungssysteme - des Oxidationskatalysators, des LNT und des Partikelfilters - im Abgastrakt. Das gleichzeitige Betreiben und Steuern der genannten Abgasnachbehandlungssysteme führt zu weiteren Schwierigkeiten, insbesondere bei der Abstimmung der Systeme aufeinander, da die unterschiedlichen Abgasnachbehandlungssysteme verschiedene und teilweise entgegenstehende Randbedingungen erfordern. Insbesondere die Anforderungen an das bevorzugte Temperaturniveau und das Luftverhältnis λ divergieren stark.

Vor diesem Hintergrund ist es die Aufgabe der vorliegenden Erfindung, eine Brennkraftmaschine gemäß dem Oberbegriff des Anspruchs 1 bereitzustellen, mit der die nach dem Stand der Technik bekannten Nachteile und Konflikte bei der Abgasnachbehandlung überwunden werden.

Eine weitere Teilaufgabe der vorliegenden Erfindung ist es, ein Verfahren zum Betreiben einer derartigen Brennkraftmaschine aufzuzeigen, mit dem insbesondere der Problematik der hohen Methan-Emissionen infolge Anfettung der Zylinderfischladung mittels innermotorischer Maßnahmen begegnet werden kann.

Gelöst wird die erste Teilaufgabe durch eine Brennkraftmaschine mit mindestens einem Zylinder und mindestens einer Abgasleitung zum Abführen der Abgase aus dem mindestens einen Zylinder, bei der ein kombiniertes Abgasnachbehandlungssystem zur Nachbehandlung des Abgases in der mindestens einen Abgasleitung vorgesehen ist, wobei das kombinierte Abgasnachbehandlungssystem ein Vier-Wege-Katalysator ist mit
- einem Oxidationskatalysator, insbesondere zur Oxidation des im Abgas befindlichen Kohlenmonoxides (CO) und der unverbrannten Kohlenwasserstoffe (HC),
- einem Speicherkatalysator (LNT) zum Speichern und Reduzieren der im Abgas befindlichen Stickoxide (NOₓ), und
- einem Partikelfilter zum Sammeln und Verbrennen der im Abgas befindlichen Rußpartikel, wobei
- die Komponenten des kombinierten Abgasnachbehandlungssystems, d.h. der Oxidationskatalysator, der Speicherkatalysator und der Partikelfilter, in Reihe geschaltet sind, und
- stromaufwärts des kombinierten Abgasnachbehandlungssystems ein zusätzlicher Speicherkatalysator (LNT) vorgesehen ist,
   und die dadurch gekennzeichnet ist, dass
- der Speicherkatalysator stromaufwärts des Partikelfilters und der Oxidationskatalysator stromaufwärts des Speicherkatalysators angeordnet ist.

Bei der erfindungsgemäßen Brennkraftmaschine werden drei Abgasnachbehandlungssysteme zu einem kombinierten Abgasnachbehandlungssystem zusammengeführt, wobei gerade durch die Kombination der verwendeten Systeme eine zufriedenstellende Reduzierung der maßgeblichen Schadstoffe, nämlich HC, CO, NOₓ und Partikel, erzielt wird, weshalb der Katalysator auch als Vier-Wege-Katalysator bezeichnet werden kann.

Die Komponenten des kombinierten Abgasnachbehandlungssystems, d.h. der Oxidationskatalysator, der

Speicherkatalysator und der Partikelfilter sind in Reihe geschaltet, wobei der Speicherkatalysator stromaufwärts des Partikelfilters und der Oxidationskatalysator stromaufwärts des Speicherkatalysators angeordnet ist.

Günstig an dieser Ausführungsform ist die Anordnung der einzelnen Komponenten, die insbesondere hinsichtlich der Temperatur, welche für die Reduzierung der jeweiligen Schadstoffe erforderlich ist, Vorteile aufweist.

Sowohl die für Dieselmotoren verwendeten Oxidationskatalysatoren als auch die bei Ottomotoren eingesetzten Drei-Wege-Katalysatoren benötigen eine bestimmte Betriebstemperatur, um die Schadstoffe in ausreichendem Maße zu konvertieren und die Schadstoffemissionen spürbar zu reduzieren. Die Drei-Wege-Katalysatoren sollen im Rahmen der vorliegenden Erfindung zu den Oxidationskatalysatoren gezählt werden.

Dadurch, dass der Oxidationskatalysator stromaufwärts der beiden anderen Komponenten vorgesehen wird, ist der Oxidationskatalysator die Abgasnachbehandlungskomponente, die am nächsten am Auslass der Brennkraftmaschine angeordnet ist und zuerst von den heißen Abgasen durchströmt wird. Folglich sind die Wärmeverluste und die damit verbundene Temperaturabsenkung der heißen Abgase vergleichsweise gering. Dementsprechend erreicht der Oxidationskatalysator seine sogenannte Anspringtemperatur von etwa 250°C auch nach einem Kaltstart innerhalb einer verhältnismäßig kurzen Zeitspanne.

Die im Oxidationskatalysator ablaufenden exothermen Reaktionen bewirken eine Erwärmung des hindurch strömenden Abgases und damit eine Erwärmung der nachgeschalteten d.h. stromabwärts des Katalysators angeordneten Abgasnachbehandlungssysteme, was für die diesen Komponenten zugewiesenen Aufgaben vorteilhaft ist.

Die Temperatur des Speicherkatalysators (LNT) sollte vorzugsweise in einem Temperaturfenster zwischen 250°C und 450°C liegen, so dass einerseits eine schnelle Reduktion sichergestellt wird und andererseits keine Desorption ohne Konvertierung der wieder freigegebenen Stickoxide stattfindet, was durch zu hohe Temperaturen ausgelöst werden kann.

Der Partikelfilter erreicht seine Regenerationstemperatur von 550°C grundsätzlich nicht während des normalen mageren Motorenbetriebs. Jedoch findet auch bei niedrigeren Temperaturen eine passive Regeneration des Filters statt, bei der im Abgas befindliche Stickoxide (NOₓ) den Sauerstoff für die Oxidation d.h. die Verbrennung der im Filter gespeicherten Rußpartikel liefern und dabei gleichzeitig selbst zu Stickstoffdioxid (N₂) konvertiert werden. Insofern stellt sich ein Synergieeffekt ein, bei dem sich zwei Schadstoffe gegenseitig neutralisieren bzw. konvertieren, so dass auch hier die vorgeschlagene Reihenfolge bei der Anordnung der einzelnen Komponenten Vorteile aufweist.

Wird die Abgastemperatur gezielt zur Regeneration des Filters angehoben, erreicht auch der Filter seine Regenerationstemperatur von etwa 550°C.

Ein zusätzlicher - stromaufwärts des kombinierten Abgasnachbehandlungssystems vorgesehener - Speicherkatalysator LNT) bietet dadurch Vorteile, dass das Abgasnachbehandlungssystem d.h. der Speicherkatalysator näher am Auslass der Brennkraftmaschine positioniert ist, weshalb die den Katalysator durchströmenden Abgase eine höhere Temperatur haben. Bedingt durch die verkürzte Abgasleitung von der Brennkraftmaschine hin zu dem zusätzlichen Speicherkatalysator können die Wärmeverluste des Abgases ebenfalls reduziert werden. Der LNT erreicht - insbesondere nach einem Kaltstart - schneller sein für eine effiziente Konvertierung der Stickoxide erforderliches Temperaturfenster. Zudem bietet ein zusätzlicher Speicherkatalysator zusätzliches Speichervolumen, so dass die Kombination aus den beiden Speicherkatalysatoren weniger häufig gereinigt werden muss als dies bei einem einzelnen Speicherkatalysator erforderlich ist d.h. die Zeitabstände zwischen den Regenerationsphasen können auf diese Weise vergrößert werden.

Vorteilhaft sind Ausführungsformen der Brennkraftmaschine, bei denen der Oxidationskatalysator, der Speicherkatalysator und der Partikelfilter über ein gemeinsames Trägersubstrat verfügen. Dies erlaubt eine kompakte Bauweise des Vier-Wege-Katalysators und die Unterbringung sämtlicher Abgasnachbehandlungskomponenten in einem Gehäuse.

Vorteilhaft sind Ausführungsformen der Brennkraftmaschine, bei denen der Oxidationskatalysator einerseits und die Kombination aus Speicherkatalysator und Partikelfilter andererseits über separate, vorzugsweise zueinander beabstandete Trägersubstrate verfügen. Diese Ausführungsform kann Vorteile bieten, wenn dem Oxidationskatalysator die Aufgabe zukommt, Methan zu oxidieren, und er zu diesem Zweck auf bis zu 550°C erwärmt wird. Diese hohen Betriebstemperaturen des Oxidationskatalysators könnten den benachbarten, stromabwärts liegenden Speicherkatalysator (LNT) so stark erwärmen, dass die Temperatur des LNT nicht mehr in dem bevorzugten Temperaturfenster zwischen 250°C und 450°C liegt und eine Desorption der zuvor gespeicherten Stickoxide erfolgt, was das Emissionsverhalten der Brennkraftmaschine verschlechtern würde.

Aus diesem Grund kann es zielführend sein, den Oxidationskatalysator unter Verwendung eines separaten Trägersubstrates auszubilden und stromaufwärts, beabstandet zu dem LNT anzuordnen. Zudem würde ein einzelnes Trägersubstrat bei den oben erwähnten Temperaturen mit sehr großen zeitlichen und lokalen Temperaturgradienten beaufschlagt, was unter Berücksichtigung der verwendeten Materialien als nachteilig anzusehen ist und zur Zerstörung des Substrates führen kann.

Dadurch wird die erste der Erfindung zugrunde liegende Aufgabe gelöst, nämlich eine Brennkraftmaschine gemäß dem Oberbegriff des Anspruchs 1 bereitzustellen, mit der die nach dem Stand der Technik bekannten Nachteile und Konflikte bei der Abgasnachbehandlung überwunden werden.

Vorteilhaft sind Ausführungsformen der Brennkraftmaschine, bei denen das mindestens eine Trägersubstrat im wesentlichen aus Siliziumcarbid und/oder Cordierit ausgebildet ist. Untersuchungen haben gezeigt, dass aus diesen Werkstoffen gefertigte Trägersubstrate aufgrund der niedrigen spezifischen Wärmekapazität vergleichsweise schnell aufgeheizt bzw. erwärmt werden können, was prinzipbedingt Vorteile bietet hinsichtlich der Schadstoffkonvertierung.

Vorteilhaft sind Ausführungsformen der Brennkraftmaschine, bei denen das mindestens eine Trägersubstrat eine Porosität von 50 bis 70% aufweist.

Vorteilhaft sind Ausführungsformen der Brennkraftmaschine, bei denen stromaufwärts des kombinierten Abgasnachbehandlungssystems ein zusätzlicher Oxidationskatalysator vorgesehen ist. Wie bei der weiter oben beschriebenen Ausführungsform, bei der der Oxidationskatalysator des kombinierten Abgasnachbehandlungssystems über ein separates Trägersubstrat verfügt, soll dabei eine übermäßige unvorteilhafte Erwärmung des LNT verhindert werden, indem stromaufwärts und beabstandet zum Speicherkatalysator ein zusätzlicher Oxidationskatalysator vorgesehen wird, der zur Oxidation von Methan auf die erforderlichen Temperaturen erwärmt werden kann, ohne dass eine Desorption des im LNT gespeicherten Stickoxide zu befürchten ist.

Bei Brennkraftmaschinen, die zur Aufladung mindestens eine Turbine eines Abgasturboladers in der mindestens einen Abgasleitung aufweisen, sind Ausführungsformen vorteilhaft, bei denen ein Interims-Oxidationskatalysator stromaufwärts der Turbine vorgesehen ist. Moderne Brennkraftmaschinen verfügen nicht selten über zwei oder gar drei Abgasturbolader, weshalb an dieser Stelle von mindestens einer Turbine eines Abgasturboladers die Rede ist.

Der Interims-Oxidationskatalysator bietet aufgrund seiner sehr nahen Anordnung am Auslass der Brennkraftmaschine Vorteile bei einem Kaltstart. Er verbessert das Emissionsverhalten der Brennkraftmaschine, insbesondere hinsichtlich der HC-Emissionen, bei Kaltstartbedingungen, da der Zeitverzug bis zu einer spürbaren Oxidation der unverbrannten Kohlenwasserstoffe wesentlich verkürzt wird d.h. der Oxidationskatalysator wesentlich schneller seine Anspringtemperatur erreicht.

Vorteilhaft sind Ausführungsformen der Brennkraftmaschine, bei denen stromabwärts des kombinierten Abgasnachbehandlungssystems ein Speicherkatalysator (LNT) und/oder ein Oxidationskatalysator und/oder ein SCR-Katalysator vorgesehen ist.

Eine Kombination aus Speicherkatalysator - nämlich den des kombinierten Abgasnachbehandlungssystems - und eines SCR-Katalysators bietet - in der vorgeschlagenen Reihenfolge - insofern Vorteile, als dass bei der Konvertierung der Stickoxide im Speicherkatalysator das für die Reduzierung der Stickoxide im SCR-Katalysator erforderliche Reduktionsmittel, nämlich Ammoniak, gebildet wird, was üblicherweise gezielt in das Abgas eingebracht werden muss.

Vorteilhaft sind Ausführungsformen der Brennkraftmaschine, bei denen stromaufwärts des kombinierten Abgasnachbehandlungssystems eine Kraftstoffeinspritzdüse vorgesehen ist, mit der Kraftstoff in die mindestens eine Abgasleitung einbringbar ist.

Wie bereits in der Beschreibungseinleitung erörtert wurde, sind innermotorische Maßnahmen zur Anreicherung des Abgases mit Reduktionsmitteln bzw. zur Erhöhung der Abgastemperatur zwar grundsätzlich geeignet, aber auch mit Nachteilen verbunden. Die wesentlichen Nachteile sind in der zunehmenden Ölverdünnung infolge einer Nacheinspritzung von Kraftstoff und dem Anstieg der Methan-Emissionen zu sehen.

Das Abgas kann gemäß der in Rede stehenden Ausführungsform aber auch durch Einspritzung von Kraftstoff direkt in den Abgastrakt mit Reduktionsmitteln angereichert werden. Auf dieselbe Weise lässt sich auch gezielt die Abgastemperatur in der Abgasleitung durch Verbrennung lokal eingespritzten Kraftstoffes anheben. Auf innermotorische Maßnahmen kann vollständig verzichtet werden, falls wie bei der vorgeschlagenen Ausführungsform eine Kraftstoffeinspritzdüse im Abgastrakt vorgesehen wird. Mit den innermotorischen Maßnahmen entfallen auch die mit diesen verbundenen negativen Auswirkungen.

An dieser Stelle soll aber ausdrücklich angemerkt werden, dass es vorteilhaft sein kann, die innermotorischen Maßnahmen zur Unterstützung heranzuziehen d.h. in Kombination mit in den Abgastrakt vorzunehmenden Einspritzungen anzuwenden. So können beide Maßnahmen im Zusammenspiel zu dem angestrebten Ergebnis führen, so dass sich die bekannten Nachteile auch nur in einem verringerten Maße einstellen.

Die zweite der Erfindung zugrundeliegende Teilaufgabe wird gelöst durch ein Verfahren, bei dem zum Reduzieren der Stickoxide (NOₓ)
■ der Oxidationskatalysator des kombinierten Abgasnachbehandlungssystems oder der zusätzliche Oxidationskatalysator auf eine vorgebbare Temperatur T_{threshold} erwärmt wird, falls die momentane Temperatur T_{catalyst} des Oxidationskatalysators kleiner ist als die vorgegebene Temperatur T_{threshold} d.h. T_{catalyst} < T_{threshold}, und anschließend
■ das Abgas für eine vorgebbare Zeitspanne mit Reduktionsmitteln zum Reduzieren der Stickoxide angereichert wird.

Das bereits für die erfindungsgemäße Brennkraftmaschine Gesagte gilt auch für das erfindungsgemäße Verfahren.

Erfindungsgemäß wird die Temperatur des Oxidationskatalysators berücksichtigt, wobei die Temperatur entweder mittels eines Temperatursensors direkt gemessen oder berechnet wird. Die Berechnung der Temperatur kann sich dabei beispielsweise auf an anderer Stelle im Abgastrakt erfasste Temperaturen stützen. Auf diese Weise können bereits vorhandene Sensoren genutzt werden, beispielsweise für eine Onboard-Diagnose (OBD) vorgesehene Sensoren

Die vorgegebene Temperatur T_{threshold} kann variieren und hängt von der jeweiligen Zielsetzung ab. Sollen lediglich die üblicherweise im Abgas enthaltenen unverbrannten Kohlenwasserstoffe bzw. das vorliegende Kohlenmonoxid oxidiert werden, wird als Mindesttemperatur bzw. Schwellentemperatur T_{thereshold} ≈ 200°C - 250°C vorgegeben. Diese Temperatur des Oxidationskatalysators sorgt zusammen mit den im Oxidationskatalysator ablaufenden exothermen Reaktionen auch dafür, dass der stromabwärts gelegene Speicherkatalysator in seinem bevorzugten Temperaturfenster von 250°C bis 450°C betrieben wird. Die Freigabe der gespeicherten Stickoxide und ihre anschließende Reduktion erfordern nur wenig Zeit d.h. nur einige Sekunden.

Sollen hingegen große Mengen an Methan oxidiert werden, die sich auch aufgrund des Einsatzes innermotorischer Maßnahmen ergeben können, ist die Vorgabe einer wesentlich höheren Temperatur erforderlich und zielführend, beispielsweise T_{threshold} ≈500°C - 550°C.

Die Erwärmung des Oxidationskatalysators auf derart hohe Temperaturen kann zu einer zeitlich verzögerten Regeneration des stromabwärts gelegenen Partikelfilters genutzt werden.

Nach der Anreicherung des Abgasstromes mit Reduktionsmitteln zum Zweck der Reinigung des Speicherkatalysators d. h. der Freigabe und der Reduktion der gespeicherten Stickoxide wird die Brennkraftmaschine wieder in den mageren Betrieb überführt bzw. die Einspritzung von Kraftstoff oder dergleichen direkt in die Abgasleitung unterbunden d.h. eingestellt. Der Abgasstrom weist dann den für die Filterregeneration notwendigen Sauerstoffüberschuss auf, wobei der Sauerstoff teilweise im Oxidationskatalysator bzw. Speicherkatalysator absorbiert wird.

Untersuchungen haben gezeigt, dass 20 bis 200 Sekunden nach Beendigung des Reinigungsvorganges des LNT der Partikelfilter seine maximale Temperatur aufweist bzw. erreicht. Die Erwärmung des Oxidationskatalysators und die Ausbreitung einer Temperaturwelle in der Abgasleitung könnten die zeitlich verzögerte Erwärmung des Partikelfilters erklären.

In der Zusammenschau kann festgestellt werden, dass kurz nach der Reinigung des LNT die Bedingungen für eine Filterregeneration vorliegen, nämlich die erforderlich hohen Temperaturen und der notwendige Sauerstoff für die Verbrennung des gesammelten Rußes.

Es ergeben sich demnach in vorteilhafter Weise Synergieeffekte, wobei sich an die Reinigung des Speicherkatalysators (deNOₓ) gleichzeitig eine Filterregeneration anschließt, so dass eine gezielte isolierte Filterregeneration weniger häufig durchzuführen ist als nach dem Stand der Technik üblich. Dies führt dazu, dass der Kraftstoffmehrverbrauch infolge Reinigung bzw. Regeneration der jeweiligen Abgasnachbehandlungssysteme im Vergleich zu aus dem Stand der Technik bekannten Verfahren niedriger ausfällt. Der Gesamtkraftstoffverbrauch kann folglich mit dem erfindungsgemäßen Verfahren reduziert werden.

Die Anhebung der Temperatur des Oxidationskatalysators d.h. die Vorgabe einer Temperatur, die höher ist als 250°C, kann ebenfalls hilfreich sein, falls eine Entschwefelung des Speicherkatalysators beabsichtigt ist. Dies erfordert üblicherweise Temperaturen des LNT's von 600°C bis 700 °C bevor der LNT mit einem Reduktionsmittel zur Reduktion der Schwefeloxide (SOₓ) versorgt wird, wohingegen eine Filterregenration ohne Verwendung katalytischer Materialien eine Filtertemperatur von 550°C erfordert. Zur Erzielung dieser Temperaturen kann der Oxidationskatalysator bzw. die Erwärmung des Oxidationskatalysators genutzt werden, zumindest unterstützend.

Die gezielt eingeleitete Entschwefelung (deSOₓ) des Speicherkatalysators kann gleichzeitig für eine tiefe Regeneration des Partikelfilters genutzt werden. Eine derartige tiefe Filterregenration ist bei Einsatz des erfindungsgemäßen Verfahrens weniger häufig notwendig und durchzuführen als nach dem Stand der Technik üblich, da der Filter bereits bei jeder Reinigung des LNT zumindest teilweise regeneriert wird. Der Gesamtkraftstoffverbrauch kann auch hierdurch mit dem erfindungsgemäßen Verfahren spürbar reduziert werden.

Vorteilhaft sind Ausführungsformen des Verfahrens, bei denen die Brennkraftmaschine zur Anreicherung des Abgases mit Reduktionsmitteln unterstöchiometrisch (λ < 1) d h. fett betrieben wird. Wie bereits in der Beschreibungseinleitung ausgeführt wurde, führt eine Verbrennung des in den Brennraum eingespritzten Kraftstoffes unter Sauerstoffmangel zu einer Anreicherung des Abgasstromes mit unverbrannten Kohlenwasserstoffen, die dann als Reduktionsmittel zur Reinigung des LNT des Vier-Wege-Katalysators dienen. Dabei ist zu berücksichtigen, dass es sich bei dem unterstöchiometrischen Betrieb der Brennkraftmaschine um eine innermotorische Maßnahem handelt, die zu erhöhten Methan-Emissionen führt, weshalb der Oxidationskatalysator ein entsprechend hohe Temperatur - 500°C bis 550°C - aufweisen muss, bevor in den unterstöchiometrischen Betrieb gewechselt wird.

Der Übergang zu einem fetten bzw. fetteren Motorenbetrieb kann auch durch die Rückführung heißen Abgases realisiert bzw. unterstützt werden, da auch dies zu einer Abnahme des Sauerstoffgehalts der Zylinderfrischladung führt. Bei Dieselmotoren kann die Drosselung der angesaugten Luft im Ansaugtrakt Verwendung finden.

Vorteilhaft sind Ausführungsformen des Verfahrens, bei denen zur Anreicherung des Abgases mit Reduktionsmitteln Kraftstoff mittels einer Kraftstoffdüse in die mindestens eine Abgasleitung eingebracht wird. Diese Ausführungsform hat den Vorteil, dass der Betrieb der Brennkraftmaschine unabhängig von der Steuerung der Abgasnachbehandlungssysteme wird, d.h. die Brennkraftmaschine kann mager d. h. überstöchiometrisch betrieben werden und gleichzeitig kann eine Reinigung des LNT (deNOₓ) eingeleitet und durchgeführt werden. Zudem werden bei der Einspritzung von Reduktionsmittel bzw. Kraftstoff direkt in die Abgasleitung die durch innermotorische Maßnahmen hervorgerufenen negativen Auswirkungen, insbesondere eine erhöhte Methan-Emission, vermieden.

Darüber hinaus ist aber auch eine Kombination der beiden zuvor erwähnten Maßnahmen, nämlich der innermotorischen Maßnahmen, beispielsweise der Anfettung der Verbrennung, einerseits und des Einspritzens von Reduktionsmittel direkt in den Abgastrakt andererseits, zielführend bei der Anreicherung des Abgases mit Reduktionsmitteln, wobei die Methan-Emissionen nur anteilig auftreten bzw. gemindert werden.

Vorteilhaft sind Ausführungsformen des Verfahrens, bei denen die Erwärmung des Oxidationskatalysators durch eine Erhöhung der Abgastemperatur realisiert wird, wobei die Erhöhung der Abgastemperatur durch innermotorische Maßnahmen erzielt wird.

Innermotorische Maßnahmen können also sowohl zur Anreicherung des Abgases mit Reduktionsmittel als auch zur Erwärmung des Oxidationskatalysators herangezogen werden. Eine innermotorische Maßnahme zur Erhöhung der Abgastemperatur ist beispielsweise die gezielte Umgehung eines im Ansaugtrakt vorgesehenen Ladeluftkühlers, wodurch die Temperatur der Zylinderfrischladung angehoben wird. Mit einer Reduzierung des Sauerstoffüberschusses der Zylinderfrischladung kann die Abgastemperatur ebenfalls erhöht werden.

Vorteilhaft sind dabei auch Ausführungsformen des Verfahrens bei denen die Erhöhung der Abgastemperatur durch mindestens eine Nacheinspritzung von Kraftstoff in den mindestens einen Zylinder realisiert wird, vorzugsweise während der Expansionsphase. Dadurch, dass der Verbrennung mehr Kraftstoff zur Verfügung gestellt wird, wird auch mehr Energie bei der chemischen Umsetzung des Kraftstoffes freigesetzt, die dann zur Erwärmung der Verbrennungsgase herangezogen wird.

Vorteilhaft sind auch Ausführungsformen des Verfahrens, bei denen die Erhöhung der Abgastemperatur durch eine Rückführung von Abgas (AGR) realisiert wird. Die heißen, in den Brennraum zurückgeführten Abgase erhöhen die Temperatur der Zylinderfrischladung.

Vorteilhaft sind bei Dieselmotoren des weiteren Ausführungsformen des Verfahrens, bei denen die Erhöhung der Abgastemperatur durch eine verstärkte Drosselung im Ansaugtrakt des Dieselmotors realisiert wird.

Vorteilhaft sind ebenfalls Ausführungsformen des Verfahrens, bei denen die Erhöhung der Abgastemperatur durch Absenkung des Luftverhältnisses λ bei magerem d. h. überstöchiometrischem Betrieb (λ > 1) der Brennkraftmaschine realisiert wird, wie bereits oben erwähnt.

Vorteilhaft sind auch Ausführungsformen des Verfahrens, bei denen die Erhöhung der Abgastemperatur dadurch realisiert wird, dass Kraftstoff in die mindestens eine Abgasleitung stromaufwärts des Oxidationskatalysators eingebracht und oxidiert wird. Damit kann die Einspritzung von Kraftstoff in die Abgasleitung nicht nur zur Anreicherung des Abgases mit Reduktionsmittel, sondern auch zur Anhebung der Abgastemperatur genutzt werden.

Vorteilhaft sind Ausführungsformen des Verfahrens, bei denen die Anreicherung des Abgases mit Reduktionsmitteln intermittierend vorgenommen wird. Diese Variante eignet sich besonderes für eine nachhaltige Oxidation der unverbrannten Kohlenwasserstoffe, also insbesondere für die Fälle, in denen hohe Methan-Mengen zu konvertieren d.h. zu oxidieren sind, wie weiter unten noch erläutert werden wird. Folglich ist die in Rede stehende Verfahrensvariante besonders günstig beim Einsatz innermotorischer Maßnahmen zur Anreicherung des Abgases mit Reduktionsmittel oder Erwärmung des Abgases.

Vorteilhaft sind dabei Ausführungsformen des Verfahrens, bei denen zur intermittierenden Anreicherung des Abgase mit Reduktionsmittel die Brennkraftmaschine abwechselnd unterstöchiometrisch (λ < 1) d.h. fett und überstöchiometrisch (λ > 1) d.h. mager betrieben wird, so dass die sauerstoffarmen fetten Betriebsphasen der Brennkraftmaschine jeweils von einer sauerstoffreichen mageren Betriebsphase unterbrochen werden. Dabei ergibt sich gewissermaßen ein pulsierender Betrieb der Brennkraftmaschine für eine vorgebbare Zeitspanne. Gegebenenfalls ist bereits ein einzelner Puls d.h. ein einmaliger Übergang in den fetten Betrieb ausreichend für die Reinigung des LNT.

Ein derartiger Betrieb der Brennkraftmaschine gewährleistet zum einen die Bereitstellung des für die Oxidation von unverbrannten Kohlenwasserstoffen notwendigen Sauerstoffes und gleichzeitig auch den für die Reinigung des Speicherkatalysators (deNOₓ) erforderlichen fetten Betrieb. Hinsichtlich der Verminderung der HC-Emissionen ist diese Verfahrensvariante vorteilhaft, wobei die Konvertierung der gespeicherten Stickoxide im LNT nach wie vor stattfindet, aber die Konvertierungsrate infolge des Phasenweisen Sauerstoffüberschusses leicht abnimmt. Letzteres ist auch dadurch bedingt, dass während des mageren Betriebs Sauerstoff im LNT aufgenommen und gespeichert wird und dieser bzw. die Freigabe dieses Sauerstoffes die Reduktion der Stickoxide (NOₓ) während des fetten Betriebs der Brennkraftmaschine nachteilig beeinflusst d.h. mindert.

Vorteilhaft sind auch Ausführungsformen des Verfahrens, bei denen die sauerstoffarmen fetten Betriebsphasen der Brennkraftmaschine weniger als 8 Sekunden, vorzugsweise 2 bis 3 Sekunden, dauern, wie Versuche gezeigt haben.

Vorteilhaft sind auch Ausführungsformen des Verfahrens, bei denen die Temperatur des Vier-Wege-Katalysators T_{four-way} berücksichtigt wird und das Verfahren nur dann durchgeführt wird, wenn diese Temperatur oberhalb einer vorgebbaren Grenztemperatur T_{Grenz} liegt d.h. wenn gilt: T_{four-way} > TGrenz. D.h. die Temperatur des Vier-Wege-Katalysators wird als notwendige Bedingung für die Durchführung des erfindungsgemäßen Verfahrens explizit mitberücksichtigt.

Die momentane Temperatur T_{four-way} des Vier-Wege-Katalysators kann dabei mittels eines im oder am Vier-Wege-Katalysator angeordneten Sensors gemessen und/oder berechnet wird. Die Berechnung der Temperatur kann sich dabei auch auf an anderer Stelle im Abgastrakt erfasste Temperaturen stützen, beispielsweise auf die gemessene Temperatur an der Turbine, der Temperatur am Austritt des Vier-Wege-Katalysators oder der Temperatur am Eintritt des Oxidationskatalysators.

In diesem Zusammenhang kann die Temperatur des Vier-Wege-Katalysators für die Temperatur des LNT oder für die Temperatur des Partikelfilters stehen.

Die vorgegebene Grenztemperatur T_{Grenz} kann - wie die Schwellentemperatur T_{threshold} - variieren und hängt von der jeweiligen Zielsetzung ab. Soll der Speicherkatalysator gereinigt werden, ist eine Grenztemperatur von T_{Grenz} = 250°C bereits ausreichend, um Speicherkatalysator in seinem bevorzugten Temperaturfenster von 250°C bis 450°C zu betreiben und eine Reduktion der Stickoxide sicherzustellen. Wird hingegen eine Regeneration des Partikelfilters beabsichtigt, für die Temperaturen von 550°C erforderlich sein können, ist die Vorgabe einer höheren Grenztemperatur erforderlich.

Wie oben bereits ausgeführt haben Untersuchungen gezeigt, dass der Partikelfilter mit einer zeitlichen Verzögerung von 20 bis 200 Sekunden seine maximale Temperatur aufweist bzw. erreicht. Die Erwärmung des Oxidationskatalysators und die Ausbreitung einer Temperaturwelle in der Abgasleitung könnten die zeitlich verzögerte Erwärmung des Partikelfilters erklären.

Eine Entschwefelung des Speicherkatalysators erfordert sogar Temperaturen von 600°C bis 700 °C bevor das Abgas mit einem Reduktionsmittel zur Reduktion der Schwefeloxide (SOₓ) angereichert wird, so dass die Vorgabe einer Grenztemperatur T_{Grenz} > 600°C zielführend ist.

Eine Erwärmung des Abgases infolge einer Oxidation von unverbrannten Kohlenwasserstoffen mittels Oxidationskatalysator, was zu einer verzögerten Anhebung der Temperatur des Vier-Wege-Katalysators führt, kann dabei in der Art berücksichtigt werden, das die Grenztemperatur T_{Grenz} niedriger angesetzt wird.

Im folgenden wird die Erfindung anhand mehrerer Ausführungsbeispiele gemäß den Figuren 1 bis 4 näher beschrieben. Hierbei zeigt:
- Fig. 1: schematisch eine Ausführungsform der Brennkraftmaschine,
- Fig. 2: schematisch eine erste Ausführungsform des Verfahrens in Gestalt eines Flussdiagramms,
- Fig. 3: schematisch eine zweite Ausführungsform des Verfahrens in Gestalt eines Flussdiagramms, und
- Fig. 4: schematisch eine dritte Ausführungsform des Verfahrens in Gestalt eines Flussdiagramms.

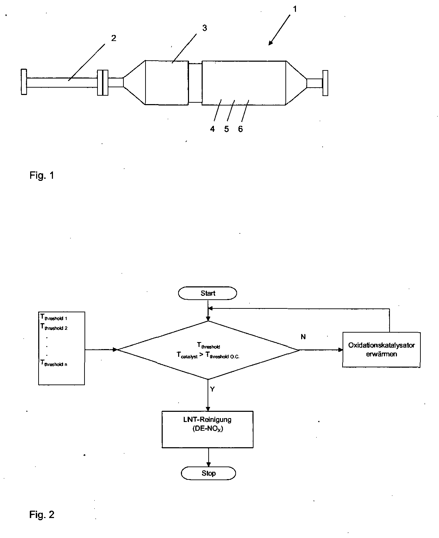

Figur 1 zeigt schematisch einen Abschnitt der Abgasleitung einer ersten Ausführungsform der Brennkraftmaschine, in dem Abgasnachbehandlungssysteme zur Reduzierung der im Abgas enthaltenen Schadstoffe angeordnet sind.

In der Abgasleitung 2 ist ein kombiniertes Abgasnachbehandlungssystem 1 zur Nachbehandlung des Abgases vorgesehen, wobei das kombinierte Abgasnachbehandlungssystem 1 ein Vier-Wege-Katalysator 1 ist. Der Vier-Wege-Katalysator 1 umfasst einen Oxidationskatalysator 4 zur Oxidation des im Abgas befindlichen Kohlenmonoxides (CO) und der unverbrannten Kohlenwasserstoffe (HC), einen Speicherkatalysator (LNT) 5 zum Speichern und Reduzieren der im Abgas befindlichen Stickoxide (NOₓ) und einen Partikelfilter 6 zum Sammeln und Verbrennen der im Abgas befindlichen Rußpartikel.

Die Komponenten 4,5,6 des kombinierten Abgasnachbehandlungssystems 1 sind in Reihe geschaltet d.h. angeordnet, wobei der Speicherkatalysator 5 stromaufwärts des Partikelfilters 6 und der Oxidationskatalysator 4 stromaufwärts des Speicherkatalysators 5 angeordnet ist.

Stromaufwärts des kombinierten Abgasnachbehandlungssystems 1 ist ein zusätzlicher Oxidationskatalysator 3 vorgesehen. Stromaufwärts des kombinierten Abgasnachbehandlungssystems 1 ist ebenfalls ein zusätzlicher Speicherkatalysator (LNT) vorgesehen (nicht dargestellt).

Im Folgenden wird auf das erfindungsgemäße Verfahren eingegangen, wobei ein Abgasnachbehandlungssystem wie in Figur 1 dargestellt vorrausgesetzt wird.

Figur 2 zeigt schematisch eine erste Ausführungsform des Verfahrens in Gestalt eines Flussdiagramms.

Zu Beginn des Verfahrens wird entsprechend einer bestimmten Zielsetzung, die vorliegend in der Reinigung des Speicherkatalysators (deNOₓ) besteht, eine Mindesttemperatur T_{threshold} für den Oxidationskatalysator vorgegeben.

Wird die Anreicherung des Abgases mit Reduktionsmittel durch Einspritzung von Kraftstoff in die Abgasleitung realisiert, ist es ausreichend eine Schwellentemperatur T_{threshold,1} ≈ 200°C - 250°C vorzugeben. Diese Temperatur des Oxidationskatalysators sorgt zusammen mit den im Oxidationskatalysator ablaufenden exothermen Reaktionen dafür, dass der stromabwärts gelegene Speicherkatalysator in seinem für die Reinigung bevorzugten Temperaturfenster von 250°C bis 450°C arbeitet.

Wird die Anreicherung des Abgases mit Reduktionsmittel hingegen mittels innermotorischer Maßnahmen realisiert, wird es erforderlich, große Mengen an Methan zu oxidieren, weshalb die Vorgabe einer höheren Temperatur erforderlich und zielführend ist, beispielsweise T_{threshold,2} ≈ 500°C - 550°C.

Die momentane Temperatur T_{catalyst} des Oxidationskatalysators wird erfasst d.h. gemessen oder berechnet und mit der vorgegebenen Temperatur T_{threshold} verglichen. Falls die momentane Temperatur T_{catalyst} des Oxidationskatalysators kleiner ist als die vorgegebene Mindesttemperatur T_{threshold} d.h. T_{catalyst}< T_{threshold,} wird der Oxidationskatalysator erwärmt bis gilt: T_{catalyst} ≥ T_{threshold}.

Anschließend wird das Abgas für eine vorgebbare Zeitspanne mit Reduktionsmitteln zum Reduzieren der Stickoxide angereichert d.h. der Speicherkatalysator gereinigt.

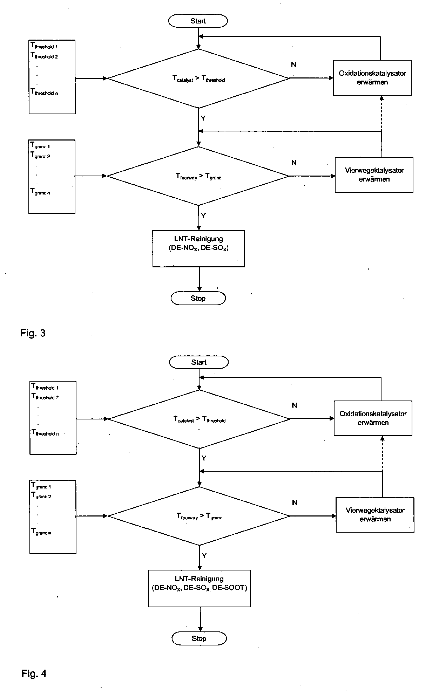

Figur 3 zeigt schematisch eine zweite Ausführungsform des Verfahrens in Gestalt eines Flussdiagramms. An dieser Stelle soll nur auf die Unterschiede zu dem in Figur 2 dargestellten Verfahren eingegangen werden, weshalb im übrigen Bezug genommen wird auf Figur 2 und die im Zusammenhang mit dieser Figur gemachten Ausführungen.

Bei der in Figur 3 gezeigten Verfahrensvariante wird zusätzlich die Temperatur des Vier-Wege-Katalysators T_{four-way} berücksichtigt. Zudem soll neben einer Reinigung des Speicherkatalysators (deNOₓ) auch eine Entschwefelung (deSOₓ) vorgenommen werden.

Das Verfahren wird nur dann vollständig durchgeführt, wenn die Temperatur T_{four-way} des Vier-Wege-Katalysators oberhalb einer vorgegebenen Grenztemperatur T_{Grenz,1} liegt d.h. wenn gilt: T_{four-way} > T_{Grenz,1}. D.h. das Vorliegen einer Mindesttemperatur des Vier-Wege-Katalysators ist eine notwendige Bedingung für die Durchführung des Verfahren.

Die momentane Temperatur des Vier-Wege-Katalysators kann dabei mittels eines im oder am Vier-Wege-Katalysator angeordneten Sensors gemessen und/oder berechnet werden. Die Berechnung der Grenztemperatur kann sich dabei auch auf an anderer Stelle im Abgastrakt erfasste Temperaturen stützen.

Eine Entschwefelung des Speicherkatalysators (deSOₓ) erfordert Temperaturen von 600°C bis 700 °C bevor das Abgas mit einem Reduktionsmittel zur Reduktion der Schwefeloxide (SOₓ) angereichert wird, so dass die Vorgabe einer Grenztemperatur T_{Grenz} > 600°C zielführend ist. Die vorgegebene Grenztemperatur T_{Grenz} korrespondiert somit mit der aktuellen Zielsetzung, nämlich einer Entschwefelung des Speicherkatalysators.

Eine Erhöhung der Abgastemperatur infolge einer Oxidation von unverbrannten Kohlenwasserstoffen mittels Oxidationskatalysator, was zu einer verzögerten Anhebung der Temperatur T_{four-way} des Vier-Wege-Katalysators führt, kann dabei in der Art berücksichtigt werden, das die Grenztemperatur T_{Grenz,2} niedriger angesetzt wird und eine Grenztemperatur vorgegeben wird mit T_{Grenz,2} < T_{Grenz,1}.

Die momentane Temperatur T_{four-way} des Vier-Wege-Katalysators wird mit der vorgegebenen Grenztemperatur T_{Grenz} verglichen. Falls die momentane Temperatur T_{four-way} kleiner ist als die vorgegebene Grenztemperatur T_{Grenz} d.h. T_{four-way} < T_{Grenz}, wird der Vier-Wege-Katalysator erwärmt bis gilt: T_{four-way} ≥ T_{Grenz}. Die Erwärmung des Vier-Wege-Katalysators kann dabei auf unterschiedliche Weise erfolgen, beispielsweise auch durch eine weitere Aufheizung des Oxidationskatalysators, was durch eine strichpunktierte Linie angedeutet ist. Der Vier-Wege-Katalysator kann aber auch mittels einer elektrischen Heizung, innermotorischer Maßnahmen oder der Einspritzung von Kraftstoff in die Abgasleitung erwärmt werden. Gleiches gilt für den weiter oben beschriebenen Oxidationskatalysator.

Anschließend wird das Abgas für eine vorgebbare Zeitspanne mit Reduktionsmitteln angereichert und der Speicherkatalysator gereinigt und entschwefelt.

Figur 4 zeigt schematisch eine dritte Ausführungsform des Verfahrens in Gestalt eines Flussdiagramms. An dieser Stelle soll nur auf die Unterschiede zu dem in Figur 3 dargestellten Verfahren eingegangen werden, weshalb im übrigen Bezug genommen wird auf Figur 3 und die im Zusammenhang mit dieser Figur gemachten Ausführungen.

Bei der in Figur 4 gezeigten Verfahrensvariante soll neben einer Reinigung des Speicherkatalysators (deNOₓ und /oder deSOₓ) auch eine Regeneration des Partikelfilters (deSoot) vorgenommen werden, für die Temperaturen von T_{four}-_{way} ≈ 550°C erforderlich sind. Eine entsprechende Grenztemperatur T_{Grenz,1} ist vorzugeben.

Eine Erhöhung der Abgastemperatur stromabwärts des Speicherkatalysators infolge der im Speicherkatalysator ablaufenden exothermen Reduktionsvorgänge und damit eine Aufheizung des Partikelfilters kann dabei in der Art berücksichtigt werden, dass die Grenztemperatur T_{Grenz,2} niedriger angesetzt wird und eine Grenztemperatur vorgegeben wird mit T_{Grenz,2} < T_{Grenz,1}.

Zudem ist für die Regeneration des Partikelfilters d.h. für die Verbrennung des gesammelten Rußes Sauerstoff erforderlich, weshalb sich die Regeneration des Filters nach Reinigung des Speicherkatalysators und dem Übergang zu einem mageren Motorenbetrieb vollzieht. Alternativ kann die Regeneration auch unterstützt bzw. gestartet werden, indem zur intermittierenden Anreicherung des Abgases mit Reduktionsmitteln die Brennkraftmaschine abwechselnd unterstöchiometrisch (λ < 1) d.h. fett und überstöchiometrisch (λ > 1) d.h. mager betrieben wird, so dass die sauerstoffarmen fetten Betriebsphasen der Brennkraftmaschine jeweils von einer sauerstoffreichen mageren Betriebsphase unterbrochen werden.

### Bezugszeichen

- 1: kombiniertes Abgasnachbehandlungssystem, Vier-Wege-Katalysator
- 2: Abgasleitung
- 3: zusätzlicher Oxidationskatalysator
- 4: Oxidationskatalysator des Vier-Wege-Katalysators
- 5: Speicherkatalysator des Vier-Wege-Katalysators
- 6: Partikelfilter des Vier-Wege-Katalysators

- AGR: Abgasrückführung
- CO: Kohlenmonoxid
- deNOₓ: Reinigung des Speicherkatalysators
- deSoot: Regeneration des Partikelfilters
- deSOₓ: Desulfuration, Entschwefelung
- HC: unverbrannte Kohlenwasserstoffe
- NOₓ: Stickoxide
- LNT: Lean NOₓ Trap
- SCR: Selective Catalytic Reduction
- SOₓ: Schwefeloxide
- T_{catalyst}: momentane Temperatur des Oxidationskatalysators
- T_{four-way}: Temperatur des Vier-Wege-Katalysators
- T_{Grenz}: vorgebbare Grenztemperatur für den Vier-Wege-Katalysator
- T_{threshold}: vorgegebene Temperatur für den Oxidationskatalysator

## Patentansprüche

1. Brennkraftmaschine mit mindestens einem Zylinder und mindestens einer Abgasleitung (2) zum Abführen der Abgase aus dem mindestens einen Zylinder, bei der ein kombiniertes Abgasnachbehandlungssystem (1) zur Nachbehandlung des Abgases in der mindestens einen Abgasleitung (2) vorgesehen ist, wobei das kombinierte Abgasnachbehandlungssystem (1) ein Vier-Wege-Katalysator (1) ist mit
- einem Oxidationskatalysator (4), insbesondere zur Oxidation des im Abgas befindlichen Kohlenmonoxides (CO) und der unverbrannten Kohlenwasserstoffe (HC),
- einem Speicherkatalysator (LNT) (5) zum Speichern und Reduzieren der im Abgas befindlichen Stickoxide (NOₓ), und
- einem Partikelfilter (6) zum Sammeln und Verbrennen der im Abgas befindlichen Rußpartikel, wobei
- die Komponenten (4, 5, 6) des kombinierten Abgasnachbehandlungssystems (1) d.h. der Oxidationskatalysator (4), der Speicherkatalysator (5) und der Partikelfilter (6), in Reihe geschaltet sind, und
- stromaufwärts des kombinierten Abgasnachbehandlungssystems (1) ein zusätzlicher Speicherkatalysator (LNT) vorgesehen ist,
**dadurch gekennzeichnet, dass**
- der Speicherkatalysator (5) stromaufwärts des Partikelfilters (6) und der Oxidationskatalysator (4) stromaufwärts des Speicherkatalysators (5) angeordnet ist.

2. Brennkraftmaschine nach Anspruch 1, **dadurch gekennzeichnet, dass** der Oxidationskatalysator (4), der Speicherkatalysator (5) und der Partikelfilter (6) über ein gemeinsames Trägersubstrat verfügen.

3. Brennkraftmaschine nach Anspruch 1, **dadurch gekennzeichnet, dass** der Oxidationskatalysator (4) einerseits und die Kombination aus Speicherkatalysator (5) und Partikelfilter (6) andererseits über separate, vorzugsweise zueinander beabstandete Trägersubstrate verfügen.

4. Brennkraftmaschine nach Anspruch 2 oder 3, **dadurch gekennzeichnet, dass** das mindestens eine Trägersubstrat im Wesentlichen aus Siliziumcarbid und/oder Cordierit ausgebildet ist.

5. Brennkraftmaschine nach einem der Ansprüche 2 bis 4, **dadurch gekennzeichnet, dass** das mindestens eine Trägersubstrat eine Porosität von 50 bis 70% aufweist.

6. Brennkraftmaschine nach einem der vorherigen Ansprüche, **dadurch gekennzeichnet, dass** stromaufwärts des kombinierten Abgasnachbehandlungssystems (1) ein zusätzlicher Oxidationskatalysator (3) vorgesehen ist.

7. Brennkraftmaschine nach einem der vorherigen Ansprüche, bei der mindestens eine Turbine eines Abgasturboladers in der mindestens einen Abgasleitung (2) vorgesehen ist, **dadurch gekennzeichnet, dass** ein Interims-Oxidationskatalysator stromaufwärts der Turbine vorgesehen ist.

8. Brennkraftmaschine nach einem der vorherigen Ansprüche, **dadurch gekennzeichnet, dass** stromabwärts des kombinierten Abgasnachbehandlungssystems (1) ein Speicherkatalysator (LNT) und/oder ein Oxidationskatalysator und/oder ein SCR-Katalysator vorgesehen ist.

9. Brennkraftmaschine nach einem der vorherigen Ansprüche, **dadurch gekennzeichnet, dass** stromaufwärts des kombinierten Abgasnachbehandlungssystems (1) eine Kraftstoffeinspritzdüse vorgesehen ist, mit der Kraftstoff in die mindestens eine Abgasleitung (2) einbringbar ist.

10. Verfahren zum Betreiben einer Brennkraftmaschine nach einem der vorherigen Ansprüche, **dadurch gekennzeichnet, dass** zum Reduzieren der Stickoxide (NOₓ)
- der Oxidationskatalysator (4) des kombinierten Abgasnachbehandlungssystems (1) oder der zusätzliche Oxidationskatalysator (3) auf eine vorgebbare Temperatur T_{threshold} erwärmt wird, falls die momentane Temperatur T_{catalyst} des Oxidationskatalysators (3, 4) kleiner ist als die vorgegebene Temperatur T_{threshold} d.h. T_{catalyst} < T_{threshold}, und anschließend
- das Abgas für eine vorgebbare Zeitspanne mit Reduktionsmitteln zum Reduzieren der Stickoxide angereichert wird.

11. Verfahren nach Anspruch 10, **dadurch gekennzeichnet, dass** die Brennkraftmaschine zur Anreicherung des Abgases mit Reduktionsmitteln unterstöchiometrisch (λ < 1) d.h. fett betrieben wird.

12. Verfahren nach Anspruch 10 oder 11, **dadurch gekennzeichnet, dass** zur Anreicherung des Abgases mit Reduktionsmitteln Kraftstoff mittels einer Kraftstoffdüse in die mindestens eine Abgasleitung (2) eingebracht wird.

13. Verfahren nach einem der Ansprüche 10 bis 12, **dadurch gekennzeichnet, dass** die Erwärmung des Oxidationskatalysators (3, 4) durch eine Erhöhung der Abgastemperatur realisiert wird, wobei die Erhöhung der Abgastemperatur durch innermotorische Maßnahmen erzielt wird.

14. Verfahren nach Anspruch 13, **dadurch gekennzeichnet, dass** die Erhöhung der Abgastemperatur durch mindestens eine Nacheinspritzung von Kraftstoff in den mindestens einen Zylinder realisiert wird, vorzugsweise während der Expansionsphase.

15. Verfahren nach Anspruch 13 oder 14, **dadurch gekennzeichnet, dass** die Erhöhung der Abgastemperatur durch eine Rückführung von Abgas (AGR) realisiert wird.

16. Verfahren nach einem der Ansprüche 13 bis 15 zum Betreiben eines Dieselmotors, **dadurch gekennzeichnet, dass** die Erhöhung der Abgastemperatur durch eine verstärkte Drosselung im Ansaugtrakt des Dieselmotors realisiert wird.

17. Verfahren nach einem der Ansprüche 13 bis 16, **dadurch gekennzeichnet, dass** die Erhöhung der Abgastemperatur durch Absenkung des Luftuerhältnisses λ bei magerem d.h. überstöchiometrischem Betrieb (λ > 1) der Brennkraftmaschine realisiert wird.

18. Verfahren nach einem der Ansprüche 13 bis 17, **dadurch gekennzeichnet, dass** die Erhöhung der Abgastemperatur **dadurch** realisiert wird, dass Kraftstoff in die mindestens eine Abgasleitung stromaufwärts des Oxidationskatalysators (3, 4) eingebracht und oxidiert wird.

19. Verfahren nach einem der Ansprüche 10 bis 18, **dadurch gekennzeichnet, dass** die Anreicherung des Abgases mit Reduktionsmitteln intermittierend vorgenommen wird.

20. Verfahren nach Anspruch 19, **dadurch gekennzeichnet, dass** zur intermittierenden Anreicherung des Abgases mit Reduktionsmitteln die Brennkraftmaschine abwechselnd unterstöchiometrisch (λ < 1) d.h. fett und überstöchiometrisch (λ > 1) d.h. mager betrieben wird, so dass die sauerstoffarmen fetten Betriebsphasen der Brennkraftmaschine jeweils von einer sauerstoffreichen mageren Betriebsphase unterbrochen werden.

21. Verfahren nach Anspruch 20, **dadurch gekennzeichnet, dass** die sauerstoffarmen fetten Betriebsphasen der Brennkraftmaschine weniger als 8 Sekunden dauern.

22. Verfahren nach einem der Ansprüche 10 bis 21, **dadurch gekennzeichnet, dass** die Temperatur des Vier-Wege-Katalysators (1) T_{four-way} berücksichtigt wird und das Verfahren nur dann durchgeführt wird, wenn diese Temperatur oberhalb einer vorgebbaren Grenztemperatur T_{Grenz} liegt d.h. T_{four-way} > T_{Grenz}.

## Claims

1. Internal combustion engine having at least one cylinder and having at least one exhaust line (2) for discharging the exhaust gases from the at least one cylinder, in which internal combustion engine a combined exhaust-gas aftertreatment system (1) for the aftertreatment of the exhaust gas is provided in the at least one exhaust line (2), wherein the combined exhaust-gas aftertreatment system (1) is a four-way catalytic converter (1) having
- an oxidation catalytic converter (4), in particular for the oxidation of the carbon monoxide (CO) in the exhaust gas and of the unburned hydrocarbons (HC),
- a storage catalytic converter (LNT) (5) for storage and reduction of the nitrogen oxides (NOₓ) in the exhaust gas, and
- a particle filter (6) for collection and combustion of the soot particles in the exhaust gas, wherein
- the components (4, 5, 6) of the combined exhaust-gas aftertreatment system (1), that is to say the oxidation catalytic converter (4), the storage catalytic converter (5) and the particle filter (6), are connected in series, and
- upstream of the combined exhaust-gas aftertreatment system (1) there is provided an additional storage catalytic converter (LNT),
**characterized in that**
- the storage catalytic converter (5) is arranged upstream of the particle filter (6) and the oxidation catalytic converter (4) is arranged upstream of the storage catalytic converter (5).

2. Internal combustion engine according to Claim 1, **characterized in that** the oxidation catalytic converter (4), the storage catalytic converter (5) and the particle filter (6) have a common support substrate.

3. Internal combustion engine according to Claim 1, **characterized in that** the oxidation catalytic converter (4) on the one hand and the combination of storage catalytic converter (5) and particle filter (6) on the other hand have separate support substrates which are preferably spaced apart from one another.

4. Internal combustion engine according to Claim 2 or 3, **characterized in that** the at least one support substrate is formed substantially from silicon carbide and/or cordierite.

5. Internal combustion engine according to one of Claims 2 to 4, **characterized in that** the at least one support substrate has a porosity of 50 to 70%.

6. Internal combustion engine according to one of the preceding claims, **characterized in that** an additional oxidation catalytic converter (3) is provided upstream of the combined exhaust-gas aftertreatment system (1).

7. Internal combustion engine according to one of the preceding claims, in which at least one turbine of an exhaust-gas turbocharger is provided in the at least one exhaust line (2), **characterized in that** an interim oxidation catalytic converter is provided upstream of the turbine.

8. Internal combustion engine according to one of the preceding claims, **characterized in that** a storage catalytic converter (LNT) and/or an oxidation catalytic converter and/or an SCR catalytic converter are/is provided downstream of the combined exhaust-gas aftertreatment system (1).

9. Internal combustion engine according to one of the preceding claims, **characterized in that** a fuel injection nozzle is provided upstream of the combined exhaust-gas aftertreatment system (1), by means of which fuel injection nozzle fuel can be introduced into the at least one exhaust line (2).

10. Method for operating an internal combustion engine according to one of the preceding claims, **characterized in that**, for the reduction of the nitrogen oxides (NOₓ),
- the oxidation catalytic converter (4) of the combined exhaust-gas aftertreatment system (1) or the additional oxidation catalytic converter (3) is heated to a predefinable temperature T_{threshold} if the present temperature T_{catalyst} of the oxidation catalytic converter (3, 4) is lower than the predefined temperature T_{threshold}, that is to say T_{catalyst} < T_{threshold,} and subsequently,
- the exhaust gas is, for a predefinable time period, enriched with reducing agents for reduction of the nitrogen oxides.

11. Method according to Claim 10, **characterized in that**, for the enrichment of the exhaust gas with reducing agents, the internal combustion engine is operated substoichiometrically (λ < 1), that is to say rich.

12. Method according to Claim 10 or 11, **characterized in that**, for the enrichment of the exhaust gas with reducing agents, fuel is introduced into the at least one exhaust line (2) by means of a fuel nozzle.

13. Method according to one of Claims 10 to 12, **characterized in that** the heating of the oxidation catalytic converter (3, 4) is realized by means of an increase in the exhaust-gas temperature, wherein the increase in the exhaust-gas temperature is achieved by engine-internal measures.

14. Method according to Claim 13, **characterized in that** the increase in the exhaust-gas temperature is realized by means of at least one post-injection of fuel into the at least one cylinder, preferably during the expansion phase.

15. Method according to Claim 13 or 14, **characterized in that** the increase in the exhaust-gas temperature is realized by means of a recirculation of exhaust gas (EGR).

16. Method according to one of Claims 13 to 15 for operating a diesel engine, **characterized in that** the increase in the exhaust-gas temperature is realized by means of intensified throttling in the intake tract of the diesel engine.

17. Method according to one of Claims 13 to 16, **characterized in that** the increase in the exhaust-gas temperature is realized by means of a reduction of the air ratio λ during lean, that is to say superstoichiometric operation (λ > 1) of the internal combustion engine.

18. Method according to one of Claims 13 to 17, **characterized in that** the increase in the exhaust-gas temperature is realized by virtue of fuel being introduced into the at least one exhaust line upstream of the oxidation catalytic converter (3, 4) and being oxidized.

19. Method according to one of Claims 10 to 18, **characterized in that** the enrichment of the exhaust gas with reducing agents is performed intermittently.

20. Method according to Claim 19, **characterized in that**, for the intermittent enrichment of the exhaust gas with reducing agents, the internal combustion engine is operated alternately substoichiometrically (λ < 1), that is to say rich, and superstoichiometrically (λ > 1), that is to say lean, such that the oxygen-depleted rich operating phases of the internal combustion engine are interrupted in each case by an oxygen-rich lean operating phase.

21. Method according to Claim 20, **characterized in that** the oxygen-depleted rich operating phases of the internal combustion engine last less than 8 seconds.

22. Method according to one of Claims 10 to 21, **characterized in that** the temperature of the four-way catalytic converter (1) T_{four}-_{way} is taken into consideration and the method is carried out only when said temperature lies above a predefinable threshold temperature T_{Grenz}, that is to say T_{four}-_{way} T_{Grenz}.

## Revendications

1. Moteur à combustion interne avec au moins un cylindre et au moins un tuyau d'échappement des gaz brûlés (2) destiné à évacuer les gaz d'échappement hors dudit au moins un cylindre, dans lequel il est prévu un système combiné de post-traitement des gaz d'échappement (1) pour le post-traitement des gaz d'échappement dans ledit au moins un tuyau d'échappement des gaz brûlés (2), dans lequel le système combiné de post-traitement des gaz d'échappement (1) est un catalyseur à quatre voies (1) avec
- un catalyseur d'oxydation (4), en particulier pour l'oxydation du monoxyde de carbone (CO) présent dans les gaz d'échappement et des hydrocarbures imbrûlés (HC),
- un catalyseur d'accumulation (LNT) (5) pour accumuler et réduire les oxydes d'azote (NOₓ) présents dans les gaz d'échappement, et
- un filtre à particules (6) pour collecter et brûler les particules de suie présentes dans les gaz d'échappement, dans lequel
- les composants (4, 5, 6) du système combiné de post-traitement des gaz d'échappement (1), c'est-à-dire le catalyseur d'oxydation (4), le catalyseur d'accumulation (5) et le filtre à particules (6) sont connectés en série, et
- il est prévu un catalyseur d'accumulation supplémentaire (LNT) en amont du système combiné de post-traitement des gaz d'échappement (1),
**caractérisé en ce que**
- le catalyseur d'accumulation (5) est disposé en amont du filtre à particules (6) et le catalyseur d'oxydation (4) est disposé en amont du catalyseur d'accumulation (5).

2. Moteur à combustion interne selon la revendication 1, **caractérisé en ce que** le catalyseur d'oxydation (4), le catalyseur d'accumulation (5) et le filtre à particules (6) bénéficient d'un substrat de support commun.

3. Moteur à combustion interne selon la revendication 1, **caractérisé en ce que** le catalyseur d'oxydation (4) d'une part et la combinaison du catalyseur d'accumulation (5) avec le filtre à particules (6) d'autre part bénéficient de substrats de support séparés, de préférence espacés l'un de l'autre.

4. Moteur à combustion interne selon la revendication 2 ou 3, **caractérisé en ce que** ledit au moins un substrat de support est réalisé essentiellement en carbure de silicium et/ou en cordiérite.

5. Moteur à combustion interne selon l'une quelconque des revendications 2 à 4, **caractérisé en ce que** ledit au moins un substrat de support présente une porosité de 50 à 70 %.

6. Moteur à combustion interne selon l'une quelconque des revendications précédentes, **caractérisé en ce qu'**il est prévu un catalyseur d'oxydation supplémentaire (3) en amont du système combiné de post-traitement des gaz d'échappement (1).

7. Moteur à combustion interne selon l'une quelconque des revendications précédentes, dans lequel il est prévu au moins une turbine d'un turbocompresseur à gaz d'échappement dans ledit au moins un tuyau d'échappement des gaz brûlés (2), **caractérisé en ce qu'**il est prévu un catalyseur d'oxydation intermédiaire en amont de la turbine.

8. Moteur à combustion interne selon l'une quelconque des revendications précédentes, **caractérisé en ce qu'**il est prévu un catalyseur d'accumulation (LNT) et/ou un catalyseur d'oxydation et/ou un catalyseur RCS en aval du système combiné de post-traitement des gaz d'échappement (1).

9. Moteur à combustion interne selon l'une quelconque des revendications précédentes, **caractérisé en ce qu'**il est prévu en amont du système combiné de post-traitement des gaz d'échappement (1) un injecteur de carburant, avec lequel du carburant peut être introduit dans ledit au moins un tuyau d'échappement des gaz brûlés (2).

10. Procédé de conduite d'un moteur à combustion interne selon l'une quelconque des revendications précédentes, **caractérisé en ce que**, pour la réduction des oxydes d'azote (NOₓ):
- on chauffe le catalyseur d'oxydation (4) du système combiné de post-traitement des gaz d'échappement (1) ou le catalyseur d'oxydation supplémentaire (3) à une température pré-déterminable Tₛₑᵤᵢₗ, dans le cas où la température instantanée T_{catalyseur} du catalyseur d'oxydation (3, 4) est inférieure à la température prédéterminée Tₛₑᵤᵢₗ c'est-à-dire si T_{catalyseur} < Tₛₑᵤᵢₗ, et ensuite
- on enrichit les gaz d'échappement avec des agents réducteurs pendant une durée pré-déterminable en vue de réduire les oxydes d'azote.

11. Procédé selon la revendication 10, **caractérisé en ce que** l'on conduit le moteur à combustion interne en vue de l'enrichissement des gaz d'échappement avec des agents réducteurs en régime sous-stoechiométrique (λ < 1), c'est-à-dire en régime riche.

12. Procédé selon la revendication 10 ou 11, **caractérisé en ce que** l'on introduit du carburant au moyen d'un injecteur de carburant dans ledit au moins un tuyau d'échappement des gaz brûlés (2) en vue d'enrichir les gaz d'échappement avec des agents réducteurs.

13. Procédé selon l'une quelconque des revendications 10 à 12, **caractérisé en ce que** l'on réalise le chauffage du catalyseur d'oxydation (3, 4) par une augmentation de la température des gaz d'échappement, dans lequel l'augmentation de la température des gaz d'échappement est obtenue par des mesures prises à l'intérieur du moteur.

14. Procédé selon la revendication 13, **caractérisé en ce que** l'on réalise l'augmentation de la température des gaz d'échappement par au moins une post-injection de carburant dans ledit au moins un cylindre, de préférence pendant la phase de détente.

15. Procédé selon la revendication 13 ou 14, **caractérisé en ce que** l'on réalise l'augmentation de la température des gaz d'échappement par un recyclage de gaz d'échappement (RGE).

16. Procédé selon l'une quelconque des revendications 13 à 15 pour la conduite d'un moteur diesel, **caractérisé en ce que** l'on réalise l'augmentation de la température des gaz d'échappement par un étranglement accru de la force d'aspiration du moteur diesel.

17. Procédé selon l'une quelconque des revendications 13 à 16, **caractérisé en ce que** l'on réalise l'augmentation de la température des gaz d'échappement par une diminution de l'excès d'air λ en régime pauvre, c'est-à-dire hyper-stoechiométrique (λ > 1) du moteur à combustion interne.

18. Procédé selon l'une quelconque des revendications 13 à 17, **caractérisé en ce que** l'on réalise l'augmentation de la température des gaz d'échappement en introduisant et en oxydant du carburant dans ledit au moins un tuyau d'échappement des gaz brûlés en amont du catalyseur d'oxydation (3, 4).

19. Procédé selon l'une quelconque des revendications 10 à 18, **caractérisé en ce que** l'on opère de manière intermittente l'enrichissement des gaz d'échappement avec des agents réducteurs.

20. Procédé selon la revendication 19, **caractérisé en ce que**, pour l'enrichissement intermittent des gaz d'échappement avec des agents réducteurs, on conduit le moteur à combustion interne alternativement en régime sous-stoechiométrique (λ < 1), c'est-à-dire riche, et en régime hyper-stoechiométrique (λ > 1), c'est-à-dire pauvre, de telle manière que les phases de fonctionnement riches, pauvres en oxygène du moteur à combustion interne soient respectivement interrompues par une phase de fonctionnement pauvre, riche en oxygène.

21. Procédé selon la revendication 20, **caractérisé en ce que** les phases de fonctionnement riches, pauvres en oxygène, du moteur à combustion interne durent moins de 8 secondes.

22. Procédé selon l'une quelconque des revendications 10 à 21, **caractérisé en ce que** l'on tient compte de la température T_{quatre-voies} du catalyseur à quatre voies (1) et on n'exécute le procédé que lorsque cette température est supérieure à une température limite pré-déterminable Tₗᵢₘᵢₜₑ, c'est-à-dire lorsque T_{quatre}-voies > Tₗᵢₘᵢₜₑ.
